# EUROPÄISCHE PATENTSCHRIFT

(11) **EP 3 685 551 B1**
(45) Veröffentlichungstag und Bekanntmachung des Hinweises auf die Patenterteilung: **25.08.2021**
(21) Anmeldenummer: 18778426.9
(22) Anmeldetag: 21.09.2018
(51) Int. Cl.: H04L 12/40, H04L 29/06, H04L 12/26

(54) **VERFAHREN ZUR ÜBERWACHUNG DER KOMMUNIKATION AUF EINEM KOMMUNIKATIONSBUS SOWIE ELEKTRONISCHE VORRICHTUNG ZUM ANSCHLUSS AN EINEN KOMMUNIKATIONSBUS**
METHOD FOR MONITORING THE COMMUNICATION ON A COMMUNICATION BUS, AND ELECTRONIC APPARATUS FOR CONNECTION TO A COMMUNICATION BUS
PROCÉDÉ DE SURVEILLANCE DE LA COMMUNICATION SUR UN BUS DE COMMUNICATION AINSI QUE DISPOSITIF ÉLECTRONIQUE DESTINÉ À LA CONNEXION À UN BUS DE COMMUNICATION

(30) Priorität: 22.09.2017 DE 102017216808
(43) Veröffentlichungstag der Anmeldung: 29.07.2020
(73) Patentinhaber: Volkswagen Aktiengesellschaft, 38440 Wolfsburg (DE)
(72) Erfinder: BUNIMOV, Viktor, 38159 Vechelde (DE); JENTZSCH, Anke, 38473 Tiddische (DE); KAMP, Birger, 38531 Rötgesbüttel (DE); MICHNA, Steven, 12557 Berlin (DE); RIECHEL, Christoph, 38685 Langelsheim (DE)
(86) Internationale Anmeldenummer: PCT/EP2018/075586
(87) Internationale Veröffentlichungsnummer: WO 2019/057882

(56) Entgegenhaltungen:
- EP-A1- 3 148 154
- DE-T5-112014 003 345
- TSUTOMU MATSUMOTO ET AL: "A Method of Preventing Unauthorized Data Transmission in Controller Area Network", 2012 IEEE 75TH VEHICULAR TECHNOLOGY CONFERENCE (VTC SPRING 2012) : YOKOHAMA, JAPAN, 6 - 9 MAY 2012, IEEE, PISCATAWAY, NJ, 6. Mai 2012 (2012-05-06), Seiten 1-5, XP032202711, DOI: 10.1109/VETECS.2012.6240294 ISBN: 978-1-4673-0989-9

## Beschreibung

Die Erfindung betrifft das technische Gebiet der Überwachung der Kommunikation auf einem Kommunikationsbus auf unberechtigte Buszugriffe. Dieses Verfahren kann insbesondere bei Kommunikationsbussen eingesetzt werden, die in Fahrzeugen eingesetzt werden. Vernetzte Steuergeräte sind auch in anderen Gebieten der Technik zu finden, z.B. in der Automatisierungstechnik, Prozesstechnik, usw. Die Erfindung betrifft weiterhin eine elektronische Vorrichtung zum Anschluss an einen Kommunikationsbus.

In modernen Fahrzeugen werden eine Vielzahl von Steuergeräten verbaut. Alleine für den Antriebstrang werden eine Anzahl Steuergeräte eingesetzt, so z.B. Motor-Steuergerät, Getriebe-Steuergerät, Wählhebel-Steuergerät, Airbag-Steuergerät und weitere. Daneben gibt es auch noch weitere Steuergeräte, die im Bereich der Fahrzeugkarosserie verbaut werden und für bestimmte Komfortfunktionen sorgen. Als Beispiele werden genannt die Tür- oder Fensterheber-Steuergeräte, Klimaanlagen-Steuergeräte, Sitzverstellungs-Steuergeräte, u.a. Dann gibt es weiterhin Steuergeräte, die zu dem Infotainment-Bereich zählen, wie Kamera-Steuergerät zur Umfeldbeobachtung, Navigationsgerät, Kommunikationsmodul und Entertainment-Gerät mit TV, Radio, Video und Musik-Funktion.

Typischerweise werden die Steuergeräte der verschiedenen Kategorien jeweils mit einem separaten, für die Gerätekategorie entsprechend ausgelegten Bus vernetzt. Es können daher mehrere verschiedene Bussysteme im Fahrzeug eingesetzt werden. Die verschiedenen Bussysteme können dabei über Gateways miteinander verbunden sein, um einen Datenaustausch zu ermöglichen. Im Bereich der Antriebstrang-Steuergeräte wird typischerweise der CAN-Bus (Controller Area Network) eingesetzt, ebenfalls im Bereich der Komfort-Steuergeräte. Im Infotainment-Bereich kommen auch andere Bussysteme zum Einsatz, wie Bussysteme die auf Ethernet-Technologie beruhen, z.B. AVB (Audio Video Bridging) der auf der Standard-Familie nach IEEE 802.1 Standard basiert. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus).

Bussysteme im Kraftfahrzeugbereich gelangen zunehmend in den Fokus von Hackerangriffen und den Versuchen, Botschaftsinhalte vorsätzlich zu manipulieren. Solche Hackerangriffe auf das Bussystem geschehen typischerweise über eine Aufschaltung an das physikalische Übertragungsmedium, also die Busleitung oder über Zugriff auf eine sogenannte OBD-Buchse (On Board Diagnose-Schnittstelle). Die Cyber-Sicherheit gelangt auch deswegen immer mehr in den Fokus, weil immer komplexere Fahrerassistenzsysteme in die Fahrzeuge gelangen bis hin zu dem automatisierten Fahren. Manipulationen müssen hier ausgeschlossen werden.

Es besteht daher ein Bedarf, die Kommunikation auf den Kommunikationsbussen im Fahrzeug wie auch anderswo immer weiter abzusichern.

Der CAN-Bus ist im Kraftfahrzeugbereich besonders verbreitet und wird häufig für die Vernetzung von sicherheitsrelevanter Elektronik im Fahrzeug eingesetzt. Deshalb besteht hier ein besonderer Bedarf für eine Absicherung der Kommunikation.

Aus der DE 10 2015 205 670 A1 sind ein Angriffserkennungsverfahren für ein Bussystem eines Kraftfahrzeuges und eine entsprechende Vorrichtung bekannt. Es geht dabei darum, Angriffe von außen auf das Bussystem zu erkennen und abzuwehren. Dazu wird in einem Gateway des Bussystems ein Modul installiert, das nach einem allgemeinen Ansatz überprüft, ob die auf dem Bus übertragenen Nachrichten nach den Kommunikationsregeln übertragen wurden. Darunter fallen verschiedene Kommunikationsregeln: Nach einem Aspekt prüft das Modul bestimmte Eigenschaften eines festgelegten Nachrichtenzyklusses. Darunter fallen z.B. jeweils die Zeit zwischen zwei aufeinanderfolgenden Nachrichten und wenn es erkennt, dass der zeitliche Abstand zweier aufeinanderfolgenden Nachrichten nicht mit der vorgegebenen Zyklusdauer übereinstimmt, gibt es eine Warnmeldung aus. Nach einem anderen Aspekt prüft das Modul, ob jeweils aufeinanderfolgend nur identische Nachrichten übertragen werden. Die Überprüfungsaspekte können einen bestimmten Nachrichtentyp betreffen.

Aus der US 2015/172306 A1 ist ebenfalls ein Angriffsüberwachungsverfahren bekannt, bei dem bei zyklisch auftretenden Nachrichten die Zykluszeiten überwacht werden. Ein Angriff wird erkannt, wenn es zu Abweichungen von der gemittelten Zykluszeit kommt. Um auch bei nicht-zyklisch auftretenden Nachrichten eine Überwachung durchführen zu können, werden diese durch Einfügen eines Sicherheitscodes abgesichert. Das Überwachungsmodul wird zentral in einem Gateway des Kfz-Kommunikationsnetzwerkes positioniert.

Aus der EP 3 148 154 A1 ist eine CAN-Vorrichtung mit einem Vergleichsmodul, das konfiguriert ist zum Koppeln mit einem CAN-Transceiver, bekannt. Das Vergleichsmodul umfasst eine Empfangsdaten-(RXD)-Schnittstelle, einen CAN-Decoder, einen Identifikatorspeicher und eine Vergleichslogik. Die RXD-Schnittstelle ist so konfiguriert, dass sie Daten vom CAN-Transceiver empfängt. Der CAN-Decoder ist so konfiguriert, dass er einen Identifikator einer von der RXD-Schnittstelle empfangenen CAN-Nachricht decodiert. Der Identifikatorspeicher ist so konfiguriert, dass er einen Eintrag speichert, der mindestens einem Identifikator entspricht. Die Vergleichslogik ist so konfiguriert, dass sie einen empfangenen Identifikator aus einer CAN-Nachricht mit dem Eintrag vergleicht, der im Identifikatorspeicher gespeichert ist, und ein Übereinstimmungssignal ausgibt, wenn der Vergleich anzeigt, dass der empfangene Identifikator der CAN-Nachricht mit dem Eintrag übereinstimmt, der im CAN-Gerät gespeichert ist.

Die Erfindung setzt sich zum Ziel, ein wirkungsvolles Überwachungsverfahren für einen Kommunikationsbus anzugeben, das zuverlässig unberechtigte Buszugriffe erkennen kann. Dabei soll Verschlüsselung möglichst vermieden werden und es soll sich das Überwachungsverfahren einfach umsetzen lassen ohne größeren Entwicklungsaufwand.

Diese Aufgabe wird durch ein Verfahren zur Überwachung der Kommunikation auf einem Kommunikationsbus gemäß Anspruch 1 sowie durch eine elektronische Vorrichtung gemäß Anspruch 11 gelöst.

Die abhängigen Ansprüche beinhalten vorteilhafte Weiterbildungen und Verbesserungen der Erfindung entsprechend der nachfolgenden Beschreibung dieser Maßnahmen.

Die Lösung besteht in einem Verfahren zur Überwachung der Kommunikation auf einem Kommunikationsbus, durch den eine Anzahl von elektronischen Stationen vernetzt werden. Eine Besonderheit besteht darin, dass das Botschaftsformat so gestaltet ist, dass die Botschaften durch einen Identifizierer gekennzeichnet sind, wobei für jede Station festgelegt wird, welche Botschaften mit welchem Identifizierer von ihr gesendet werden dürfen. Dabei wird eine Eindeutigkeitsregel eingehalten, die verbietet, dass eine andere Station eine Nutzdaten-Botschaft mit einem Identifizierer versendet, der schon für diese Station reserviert ist. Das Verfahren kennzeichnet sich dadurch aus, dass in einer oder mehreren oder allen der elektronischen Stationen ein Überwachungsmodul vorgesehen wird, das überwacht, ob auf dem Kommunikationsbus eine Nutzdaten-Botschaft mit einem Identifizierer von einer anderen Station gesendet wird, der schon für die eigene Station reserviert ist. Das Verfahren ist ebenso einfach wie wirkungsvoll. Bei dem Verfahren wird die besondere Eindeutigkeitsregel ausgenutzt.

Dieses Überwachungsverfahren wird bei dem Kommunikationsbus nach einer Variante der Familie der CAN-Bus Standards, entsprechend Controller Area Network, eingesetzt. Dieses ist insbesondere in dem Kfz-Bereich sehr verbreitet und erfüllt die Voraussetzungen.

Wenn eine CAN-Bus Remote Frame Botschaft erkannt wird mit einem Botschafts Identifizierer, der für die Station reserviert ist, wird kein unberechtigter Buszugriff angenommen und keine Gegenmaßnahme eingeleitet. Ein Remote Frame kann ausnahmsweise denselben Botschafts-Identifizierer benutzen. Diese Botschaft enthält aber keine Nutzdaten und wird deshalb als nicht so gefährlich eingestuft. Sollte durch mehrfaches Aussenden des Remote-Frames von einem Angreifer eine Überflutung des Busses erfolgen, können durch die bekannten Überwachungsmaßnahmen der Zykluszeit solche Angriffe auch unterbunden werden.

Zur Implementierung des Verfahrens ist es von Vorteil, wenn das Überwachungsmodul für die Überwachung auf eine Sendetabelle zugreift, in der alle der für die Station reservierten Identifizierer verzeichnet sind, und den Identifizierer einer empfangenen Botschaft mit den Einträgen in der Sendetabelle vergleicht. Das Anlegen der Tabelle ist bei dem CAN-Bus für die Akzeptanzfilterung auch schon erforderlich und kann entsprechend realisiert werden. Das Durchführen des Vergleiches lässt sich in einem Mikrocomputer einfach realisieren. Wenn es hier zu einer Überlastung des Prozessors kommen sollte, kann dafür alternativ eine Spezialschaltung, realisiert durch einen FPGA-Chip, eingesetzt werden.

Bei Feststellen einer Übereinstimmung des Botschafts-Identifizierers der empfangenen Botschaft mit einem Eintrag in der Sendetabelle wird von dem Überwachungsmodul ein unberechtigter Buszugriff festgestellt und es können Gegenmaßnahmen eingeleitet werden.

Weil ja die Station, die die Kommunikation auf dem Bus überwacht, selbst auch Botschaften mit den für sie reservierten Identifizierern sendet, ist es nötig, dass während des Zustandes, in dem die Station selbst eine Botschaft über den Kommunikationsbus sendet, die Durchführung der Gegenmaßnahmen unterdrückt wird. Sonst würden die von der Station regulär ausgesendeten Botschaften auch als Angriff erkannt werden und unnötigerweise Gegenmaßnahmen eingeleitet werden. Es gibt mehrere Möglichkeiten, um dies zu erreichen.

In vorteilhafter Weise wird das Überwachungsmodul während des Zustandes, in dem die Station selbst eine Botschaft über den Kommunikationsbus sendet, inaktiv geschaltet und während des Zustandes, wo es Botschaften von dem Kommunikationsbus empfängt, aktiv geschaltet. Während der Sendephase der eigenen Station können keine anderen Botschaften über den Kommunikationsbus übertragen werden, so dass durch Inaktivschaltung des Überwachungsmoduls kein Sicherheitsrisiko entsteht.

Andere Möglichkeiten bestehen darin, dass, wenn die Station selbst sendet, der Bus weiterhin überwacht wird, aber die Gegenmaßnahme nicht eingeleitet wird. Es würde also trotz des Erkennens einer irregulären Botschaft keine Alarmierung, Warnmeldung, usw. erfolgen.

Eine dritte Möglichkeit besteht darin, dass, wenn die Station selbst sendet, die irreguläre Botschaft erkannt wird, eine Alarmierung oder Warnmeldung erfolgt, diese Meldung aber von der Station, die die Meldung empfängt, in einer entsprechend ausgelegten Empfänger-Routine ignoriert wird. Die Alarmierung oder Warnmeldung kann durch Aussenden einer entsprechenden Botschaft über den Kommunikationsbus z.B. an ein Infotainment-Steuergerät im Fahrzeug erfolgen.

In vorteilhafter Weise kann das Verfahren bei einem Kommunikationsbus eingesetzt werden, das für den Austausch von Botschaften zwischen elektronischen Komponenten eines Fahrzeuges ausgelegt ist. Insbesondere dort werden Bussysteme eingesetzt, bei denen solche Identifizierer verbunden mit der beschriebenen Eindeutigkeitsregel eingesetzt werden.

Beispiele von Gegenmaßnahmen, die bei dem Verfahren eingesetzt werden können, sind:
- Ausgeben einer Warnmeldung an den Fahrzeugführer, beispielsweise mit einem optischen, akustischen oder haptischen Signal,
- Einschalten der Alarmanlage,
- Absetzen einer Manipulationsmeldung über Funk an einen Datenbank-Zentralrechner des Autoherstellers oder einer Behörde oder an ein Smartphone des Fahrzeughalters,
- Abspeichern von Ort, Datum, Zeit des Manipulationsereignisses in einem Speicher
- Blockieren des Schlüssels, mit dem das Fahrzeug eingeschaltet wurde.

Dabei können auch mehrere der aufgelisteten Gegenmaßnahmen parallel eingesetzt werden.

Eine weitere Gegenmaßnahme betrifft das sofortige Senden eines Fehlersignals noch während die unberechtigte Botschaft über den Bus gesendet wird.

Diese Gegenmaßnahme nutzt einen Fehlerschutzmechanismus aus, der z.B. beim CAN-Protokoll vorgesehen ist. Das CAN-Protokoll schreibt aus Gründen netzwerkweiter Datenkonsistenz vor, dass bei lokalen Störungen eine fehlererkennende CAN-Busstation alle im CAN-Netzwerk angeschlossenen CAN-Busstationen davon in Kenntnis zu setzen hat. Dazu überträgt die fehlererkennende CAN-Busstation ein Fehlersignal ("Error Flag"), welches sich aus sechs dominanten Bits zusammensetzt. Damit wird bewusst die Bitstuffingregel des CAN-Bus-Protokolls verletzt und so ein Bitstuffing-Fehler verursacht. Beim CAN-Bus sorgt die Übertragung des "Error Flags" dafür, dass alle anderen CAN-Busstationen ebenfalls ein "Error Flag" (sekundäres "Error Flag") übertragen und somit ebenfalls wie der Sender des primären "Error Flags" die Datenübertragung abbrechen.

Beim CAN-Bus schließt sich der Aussendung eines "Error Flags" immer die Übertragung eines "Error Delimiters" an. Dieser setzt sich aus acht rezessiven Bits zusammen. Der "Error Delimiter" ersetzt den "ACK-Delimiter" und den EOF-Code einer regulären Botschaftsübertragung, so dass sich zusammen mit der obligatorischen Sendepause (ITM - Intermission) auf dem CAN-Bus elf rezessive Bit ergeben (Bus-Idle-Kennung).

Dieses Verhalten kann so oder in angepasster Form auch bei einem anderen Bus eingesetzt werden, um das Busüberwachungsverfahren zu erweitern. Das geschieht so, dass, wenn ein Steuergerät einen Angriff erkannt hat, es die eingeschleuste Botschaft durch Senden des Fehler-Signals unbrauchbar macht. Alle Empfänger-Stationen verwerfen dann diese Botschaft. Die Schadbotschaft wird dadurch unmittelbar unschädlich gemacht.

Auf diese Weise kann sofort verhindert werden, dass eingeschleuste Botschaften einen Schaden anrichten können.

Die genannte Nutzdaten-Botschaft soll auch so verstanden werden, dass sie in vorteilhafterweise auch einen Steuerbefehl beinhalten kann. Das ist besonders vorteilhaft, wenn das Überwachungsverfahren bei dem sogenannten LIN-Bus eingesetzt wird, entsprechend Local Interconnect Network Bus. Dort werden die Identifizierer von Botschaften auch zur Kennzeichnung bestimmter Steuerbefehle benutzt.

Darüber hinaus können Nutzdaten in beliebiger Form enthalten sein, z.B. Sensordaten, Einstellparameter, Audiodaten, Videodaten, usw.

Die Nutzdaten-Botschaft könnte einem CAN-Bus Standard Data Frame entsprechen.

Für den Einsatz beim CAN-Bus ist es besonders vorteilhaft, wenn als Fehler-Signal, das über den CAN-Bus als Gegenmaßnahme gesendet wird, das dort für den Fehlerfall vorgesehene "Error-Flag" gesendet wird.

Für eine elektronische Vorrichtung zum Anschluss an einen Kommunikationsbus ist es vorteilhaft, wenn die Vorrichtung ein Überwachungsmodul aufweist, welches für die Überwachung nach den Schritten nach dem beschriebenen Überwachungsverfahren ausgelegt ist.

Ein Ausführungsbeispiel der Erfindung ist in den Zeichnungen dargestellt und wird nachfolgend anhand der Figuren näher erläutert.

Es zeigen:
- Fig. 1: das Prinzip der Vernetzung von elektronischen Komponenten mittels CAN-Bus;
- Fig. 2: ein Blockdiagramm für ein Fahrzeug-Kommunikationsnetzwerk mit Steuergeräten verschiedener Kategorie;
- Fig. 3: das Format des Standard Frame-Übertragungsrahmens beim CAN-Bus;
- Fig. 4: das Format des Remote Frame-Übertragungsrahmens beim CAN-Bus;
- Fig. 5: ein Blockschaltbild einer CAN-Bus-Schnittstelle, die mit einem Überwachungsmodul gemäß der Erfindung ausgestattet ist;
- Fig. 6: ein Flussdiagramm für ein Programm, das als Überwachungsmodul auf der CAN-Busschnittstelle installiert ist, und
- Fig. 7: ein Diagramm, das die durch einen Angreifer eingeschleusten Botschaften während der Überwachungsphase illustriert.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

Der CAN-Bus wurde schon 1994 standardisiert. Die entsprechende ISO-Norm hat die Nummer ISO 11898. Es gibt eine Norm für den Highspeed-Bereich bis 1 Mbit/s, das ist die Norm ISO 11898-2. Dann gibt es eine Norm für den Lowspeed-Bereich bis 125 kBit/s, das ist die Norm ISO 11898-3. Durch das anwachsende Datenaufkommen ergeben sich immer höhere Buslasten auf den CAN-Bussen. Dies führte zu einer Weiterentwicklung des CAN-Busses. Der erweiterte CAN-Bus ist unter dem Begriff CAN FD-Bus bekannt. FD steht dabei für Flexible Data Rate. Bei dieser CAN-Bus Variante wird die Datenrate umgeschaltet. Für die Arbitrierungsphase bleibt die Rate niedrig, wie beim klassischen CAN-Bus. Für die Übertragung der Nutzdaten wird auf eine höhere Datenrate umgeschaltet. Überträgt man die Nutzdaten einer CAN-FD-Botschaft schneller, so verkürzt sich die Dauer der Busbelegung und die Buslast verringert sich. Wenn die Übertragungsdauer im gleichen Rahmen bleibt wie bei den klassischen CAN-Botschaften, könnten größere Datenmengen mit einer CAN-FD-Botschaft transportiert werden. So wurde es auch bei CAN FD realisiert. Statt des 8 Byte langen Nutzdatenfeldes wird bei CAN FD ein 64 Byte langes Nutzdatenfeld eingesetzt. Die Datenrate steigt für die Übertragung des Nutzdatenfeldes bei einer Umsetzung z.B. von 500 kbit/s auf 2 Mbit/s an.

Es gibt beim klassischen CAN-Bus auch ein spezielles CAN Remote Frame Format. Der CAN Remote Frame wird von einer Station gesendet, um bestimmte Daten von einer anderen Station anzufordern.

Bei der nachfolgenden Beschreibung des Ausführungsbeispiels werden die Busstationen, wie im Kfz-Bereich üblich, als Steuergeräte bezeichnet. Es ist aber auch möglich, dass eine Busstation nicht als Steuergerät ausgelegt ist. Als Beispiele werden genannt bestimmte Sensoren oder Aktoren (z.B. Stellglieder), die an den Bus angeschlossen werden.

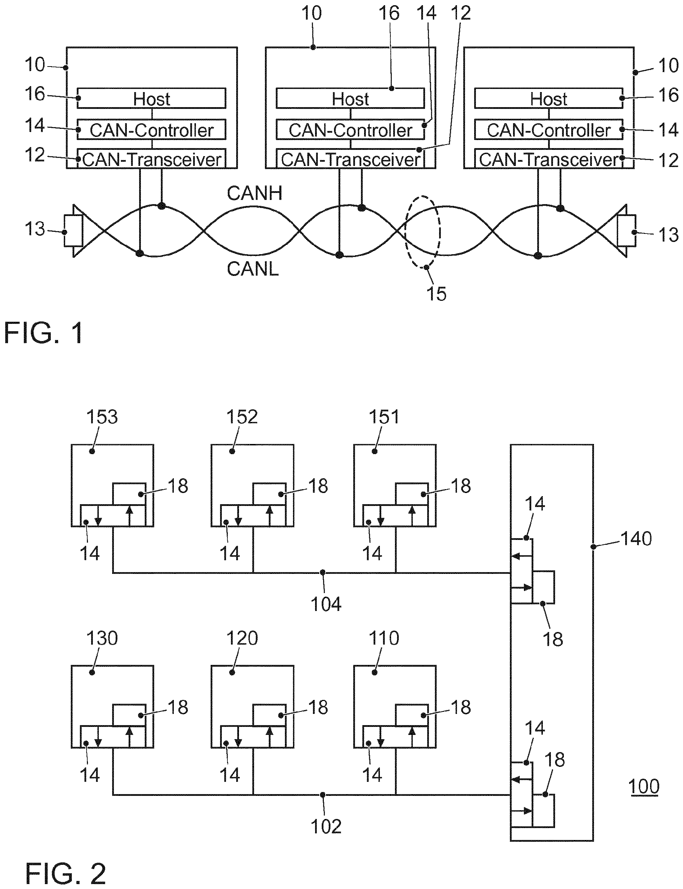

Fig. 1 zeigt das Prinzip der Vernetzung von elektronischen Komponenten mittels CAN-Bus. Ein CAN-Netzwerk ist ein Systemverbund aus CAN-Knoten (elektronische Komponenten (Steuergeräte, Sensoren, Aktoren) mit CAN-Schnittstelle), die über ihre jeweiligen CAN-Schnittstellen und einem alle CAN-Schnittstellen verbindendes Übertragungsmedium (CAN-Bus) untereinander Daten austauschen. Es sind drei CAN-Knoten 10 dargestellt. Die Busstruktur des CAN-Bus ist linear. Es gibt daher eine Busleitung 15, an die alle drei CAN-Knoten 10 angeschlossen sind. Als Busleitung 15 wird in den häufigsten Einsatzfällen eine verdrillte, ungeschirmte Zweidrahtleitung (Unshielded Twisted Pair - UTP) genutzt, über die eine symmetrische Signalübertragung erfolgt. Bei der symmetrischen Signalübertragung werden die Signale als Spannungsdifferenzen über zwei Leitungen übertragen. Das Leitungspaar setzt sich dabei aus einer nicht invertierten CANH und einer invertierten Signalleitung CANL zusammen. Aus der Differenz der auf diesen beiden Leitern anliegenden Signale rekonstruieren die Empfänger das ursprüngliche Datensignal. Dies hat den Vorteil, dass sich Gleichtaktstörungen, die auf beiden Leitern der Busleitung 15 auftreten, durch die Differenzbildung weglöschen und sich so nicht auf die Übertragung auswirken.

Um Signalreflektionen zu vermeiden ist die Busleitung 15 an beiden Leitungsenden mit einem Abschlusswiderstand 13 der Größe des Wellenwiderstandes der Busleitung (120 Ohm) abgeschlossen.

Eine CAN-Schnittstelle setzt sich aus zwei Teilen zusammen: der Kommunikationssoftware und der Kommunikationshardware. Während die Kommunikationssoftware höhere Kommunikationsdienste umfasst, sind die grundlegenden Kommunikationsfunktionen typischerweise in Hardware implementiert: Hier werden zwei Hardware-Komponenten unterschieden: Der CAN-Controller 14 sorgt für die einheitliche Abwicklung des CAN-Kommunikationsprotokolls, und entlastet dadurch den Host 16, auf dem die bereits erwähnte Kommunikationssoftware läuft. Der CAN-Transceiver 12 sorgt für die Ankopplung des CAN-Controllers 14 an den CAN-Bus 15. Er formt die Signale für die Datenübertragung beim Sendevorgang und macht die Signalaufbereitung im Empfangsfall.

Fig. 2 zeigt den typischen Aufbau eines Kommunikationsnetzwerkes eines modernen Kraftfahrzeuges. Mit der Bezugszahl 151 ist ein Motorsteuergerät bezeichnet. Die Bezugszahl 152 entspricht einem Wählhebel-Steuergerät und die Bezugszahl 153 bezeichnet ein Getriebe-Steuergerät. Weitere Steuergeräte, wie ein zusätzliches Fahrdynamik-Steuergerät (für Fahrzeuge mit elektrisch verstellbaren Dämpfern), Airbag-Steuergerät usw., können im Kraftfahrzeug vorhanden sein. Die Vernetzung solcher Steuergeräte, die alle der Kategorie des Antriebsstrangs zugerechnet werden, geschieht typischerweise mit dem CAN-Bussystem (Controller Area Network) 104, welches als ISO Norm standardisiert ist, meist als ISO 11898-1. Für verschiedene Sensoren im Kraftfahrzeug, die nicht mehr nur an einzelne Steuergeräte angeschlossen werden sollen, ist es ebenfalls vorgesehen, dass sie an das Bussystem 104 angeschlossen werden und deren Sensordaten über den Bus zu den einzelnen Steuergeräten übertragen werden. Beispiele von Sensoren im Kraftfahrzeug sind Raddrehzahlsensoren, Lenkwinkelsensoren, Beschleunigungssensoren, Drehratensensoren, Reifendrucksensoren, Abstandssensoren, Klopfsensoren, Luftgütesensoren usw. Mit der Wählhebel-Bedienvorrichtung, die mit dem Wählhebel-Steuergerät verbunden ist, kann der Fahrer Fahrmodi anwählen. Darunter fallen Gangwahl und Motoreinstellungen wie Sport-Modus, Normal-Modus, Allradantrieb, usw.

Das moderne Kraftfahrzeug kann aber noch weitere Komponenten aufweisen, wie Videokameras, z.B. als Rückfahrkamera oder als Fahrerüberwachungskamera. Im Kraftfahrzeug befinden sich dann auch noch weitere elektronische Vorrichtungen. Diese sind mehr im Bereich der Fahrgastzelle angeordnet und werden oft auch von dem Fahrer bedient. Beispiele sind eine Benutzerschnittstellenvorrichtung, mit der der Fahrer Einstellungen vornehmen kann, aber auch klassische Komponenten bedienen kann. Darunter fallen die Blinker-Steuerung, Scheibenwischersteuerung, Lichtsteuerung, Audioeinstellungen für das Radio, andere Einstellungen für das Autotelefon, Navigationssystem usw. Diese Benutzerschnittstellenanordnung ist mit der Bezugszahl 130 versehen. Die Benutzerschnittstellenanordnung 130 ist oft auch mit einem Dreh/Druckschalter ausgestattet, über den der Fahrer die verschiedenen Menüs anwählen kann, die auf einem Display im Cockpit angezeigt werden. Andererseits fällt auch ein berührungsempfindliches Display in diese Kategorie. Selbst die Spracheingabe für die Bedienungsunterstützung fällt in diesen Bereich.

Das Navigationssystem hat die Bezugszahl 120, welches ebenfalls im Bereich des Cockpits verbaut wird. Die Route, welche auf einer Karte angezeigt wird, kann natürlich ebenfalls auf dem Display im Cockpit dargestellt werden. Weitere Komponenten, wie eine Freisprecheinrichtung, können vorhanden sein, sind aber nicht näher dargestellt. Die Bezugszahl 110 bezeichnet noch eine On-Board Unit. Diese On-Bord Unit 110 entspricht einem Kommunikationsmodul, über das das Fahrzeug mobile Daten empfangen und senden kann. Typischerweise handelt es sich hier um ein Mobilfunk-Kommunikationsmodul, z. B. nach dem LTE-Standard. All diese Geräte sind dem Infotainment-Bereich zuzuordnen. Sie werden deshalb über ein auf die speziellen Bedürfnisse dieser Gerätekategorie ausgelegtes Bussystem 102 vernetzt. Im gezeigten Beispiel wird davon ausgegangen, dass auch das Bussystem 102 in einer Variante des CAN-Bus realisiert wurde. In Frage käme der schon erwähnte CAN FD-Bus, da dort Daten mit höherer Datenrate transportiert werden können, was für die vernetzten Steuergeräte im Infotainment-Bereich von Vorteil ist.

Oft wird für den Infotainment-Bereich ein anderes Bussystem eingesetzt. Es wird diesbezüglich auf die Bussysteme AVB (Audio Video Bridging), den MOST Bus (Media Oriented System Transport) oder den D2B Bus (Domestic Digital Bus) als Beispiel hingewiesen. Zu dem Zweck, dass fahrzeugrelevante Sensordaten über die Kommunikationsschnittstelle 110 zu einem anderen Fahrzeug oder zu einem externen Zentralrechner einer Datenbank übertragen werden sollen, ist das Gateway 140 vorgesehen. Dieses ist mit beiden verschiedenen Bussystemen 102 und 104 verbunden. Das Gateway 140 ist dazu ausgelegt, die Daten, die es über den CAN-Bus 104 empfängt, so umzusetzen, dass sie in das Übertragungsformat des Infotainment-Busses 102 umgesetzt werden, so dass sie in den dort spezifizierten Paketen verteilt werden können. Für die Weiterleitung dieser Daten nach extern, also zu einem anderen Kraftfahrzeug oder zu dem Zentralrechner, ist die On-Board-Unit 110 mit der Kommunikationsschnittstelle dazu ausgerüstet, diese Datenpakete zu empfangen und wiederum in das Übertragungsformat des entsprechend eingesetzten Mobilfunkstandards umzusetzen. Eine Umsetzung ist ebenfalls erforderlich, wenn der Bus 102 als CAN FD-Bus realisiert wird.

Wie in Fig. 2 dargestellt, wird in jedem der an den jeweiligen CAN-Bus 102, 104 angeschlossenen Steuergeräte ein Überwachungsmodul 18 vorgesehen.

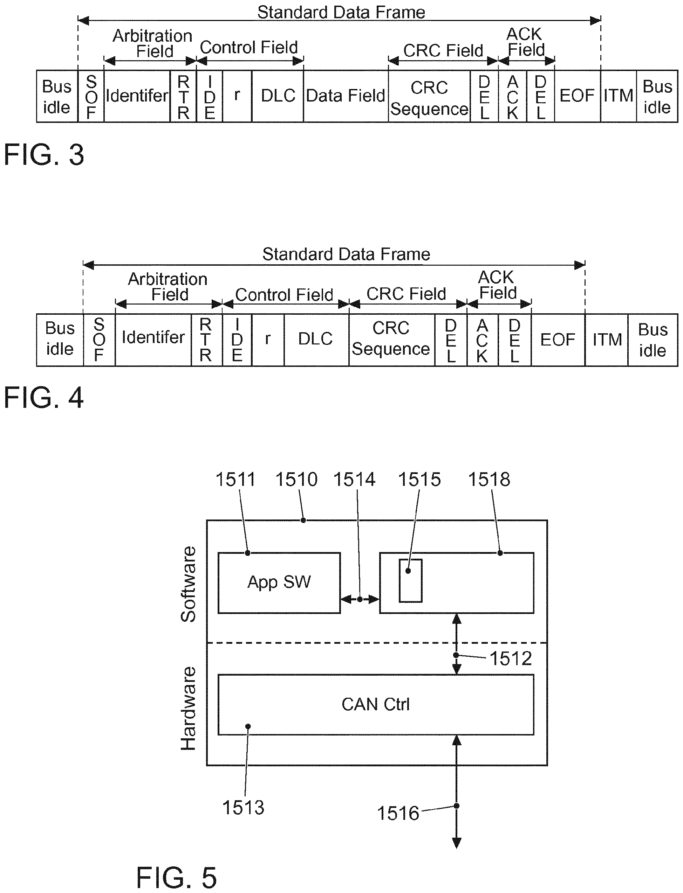

Fig. 3 zeigt das Botschaftsformat eines CAN Standard Frames. Genauer gesagt, veranschaulicht Fig. 3 ein CAN-Übertragungsrahmenformat gemäß dem CAN-Kommunikationsstandard.

Es sind viele verschiedene einzelne Bits im Übertragungsrahmen nach ISO 11898-1 vorhanden, die Steuerungszwecke erfüllen. Die verschiedenen Felder und Steuerungsbits des Übertragungsrahmens sind mit ihrer Bezeichnung in englischer Sprache in der folgenden Tabelle aufgelistet. Ebenfalls wird die Länge der einzelnen Felder angegeben. Bei der nachfolgenden Erwähnung dieser Bits wird die ausführliche Bezeichnung nicht mehr wiederholt.

| Control Bit | Ausführliche Bezeichnung | Länge |
|---|---|---|
| SOF | Start of Frame | 1 Bit |
| Identifier | Identifier | 9 Bits |
| RTR | Remote Transmission Request | 1 Bit |
| IDE | Identifier Extension | 1 Bit |
| r | Reserved Bit | 1 Bit |
| DLC | Data Lenqth Code | 4 Bit |
| Data Field | Data Field | 0-8 Bytes |
| CRC | CRC Sequence | |
| DEL | CRC Delimiter | 1 Bit |
| ACK | Acknowledqe | 1 Bit |
| DEL | ACK Delimiter | 1 Bit |
| EOF | End of Frame Code | 4 Bit |

Ein CAN-Frame enthält ein Start-of-Frame (SOF) -Feld, ein Arbitrationsfeld, ein Steuerfeld, ein Datenfeld, ein Cyclic Redundancy Check (CRC) Feld, ein ACK-Feld, ein End-of-Frame (EOF) und eine Intermission Sequence (ITM) Feld.

Gemäß einer beispielhaften Ausführungsform der Erfindung ist das SOF-Feld ein Feld, das den Beginn eines CAN-Rahmens anzeigt, d.h. den Beginn einer Nachricht. Das Arbitrierungsfeld identifiziert eine Nachricht und weist der Nachricht eine Priorität zu. Gemäß der Länge eines in dem Arbitrierungsfeld zugeordneten Identifikationsfeldes wird der CAN-Rahmen in ein Standardformat und ein erweitertes Format aufgeteilt (gezeigt ist das Standardformat). Im Standardformat hat das Arbitrierungsfeld eine Länge von 11 Bits. Für das erweiterte Format beträgt die Länge des Identifikationsfeldes im Arbitrierungsfeld 29 Bits.

Der Identifizierer legt die Priorität des Datenrahmens fest und sorgt zusammen mit der Akzeptanzfilterung für die in der Kommunikationsmatrix definierten Sender-Empfänger-Relationen im CAN-Netzwerk. In der Kommunikationsmatrix ist für jedes Steuergerät festgelegt, welche Botschaften es verarbeitet. Wenn also eine Botschaft eingeht, dessen Botschafts-Identifizierer nicht dort aufgelistet ist, wird diese Botschaft durch die Akzeptanzfilterung aussortiert und nicht an die Applikation weitergeleitet.

Mittels des RTR-Bit teilt die Sendestation den Empfängern den Frametyp (Data Frame oder Remote Frame) mit. Ein dominantes RTR-Bit zeigt einen Data Frame an, entsprechend ein rezessives Bit den Remote Frame. Zusätzlich kann das Arbitrierungsfeld ein Identifikationserweiterungsfeld (IDE) mit einer Länge von 1 Bit enthalten, um zu identifizieren, ob ein Rahmen das Standardformat oder das erweiterte Format hat. Wenn der Wert des IDE-Feldes 0 ist, zeigt dies das Standardformat an. Wenn der Wert 1 ist, bedeutet dies das erweiterte Format.

In dem DLC-Feld wird den Empfängern die Anzahl der in der Botschaft enthaltenen Nutzdaten-Bytes angezeigt. Transportiert werden die Nutzdaten-Bytes im Data Field. Maximal können mit einem Data Frame acht Nutzdaten-Bytes übertragen werden. Gegen Übertragungsfehler werden die Nutzdaten-Bytes mithilfe einer im CRC-Feld übertragenen Prüfsumme unter Anwendung des Cyclic Redundancy Checks abgesichert.

Ausgehend vom Ergebnis des CRC Checks quittieren die Empfänger im ACK-Slot positiv oder negativ den Empfang. Dabei wird ein ACK-Bit am Ende der Nachricht durch die CAN-Controller übertragen, die die Nachricht genau empfangen haben. Der Knoten, der die Nachricht gesendet hat, prüft, ob das ACK-Bit auf dem CAN-Bus vorhanden ist oder nicht. Wenn ACK nicht gefunden wird, ist dies ein Indiz, dass ein Knoten die Nachricht nicht korrekt empfangen konnte und die Sendestation kann eine erneute Übertragung versuchen.

Beendet wird die Übertragung eines Daten-Rahmens mit sieben rezessiven Bits, das entspricht dem End Of Frame Code EOF.

Fig. 4 zeigt noch das Botschaftsformat eines CAN Remote Frames. Mit dem Remote Frame kann ein Steuergerät gewünschte Nutzdaten anfordern, wenn diese nicht sowieso zyklisch gesendet werden. Bei Anwendungen im Automobil kommt dieser Rahmentyp kaum zur Anwendung, da dort die Datenübertragung nicht auf Nachfrage, sondern im Wesentlichen zyklisch erfolgt.

Bis auf das fehlende Datenfeld entspricht der Aufbau des Remote Frames dem des Data Frames. Die Unterscheidung zwischen Data und Remote Frame erfolgt mittels des RTR-Bit. Im Falle eines Data Frames wird das RTR-Bit dominant gesendet. Ein Remote Frame ist durch ein rezessives RTR-Bit gekennzeichnet.

Prinzipiell können für alle existierenden Data Frames im CAN-Netzwerk entsprechende Remote Frames definiert werden. Dazu hat man nur darauf zu achten, dass die Identifier der Remote Frames den Identifiern der assoziierten Data Frames entsprechen. Sobald ein CAN-Knoten einen Remote Frame empfängt, dessen Identifizierer mit einem Identifizierer in der eigenen Kommunikationsmatrix identisch ist, antwortet er mit dem entsprechenden Standard Frame.

Die Fig. 5 zeigt jetzt die Implementierung des Überwachungsmoduls 18 in Form eines Softwaremoduls. Mit der Bezugszahl 1510 ist die CAN-Schnittstelle des Motor-Steuergerätes 151 bezeichnet. Diese besteht aus den Hardware-Komponenten CAN-Controller 1513 und CAN-Transceiver (nicht dargestellt) und aus den beiden Softwarekomponenten Applikations-Software 1511 und dem Überwachungsmodul 1518. Zwischen beiden SoftwareKomponenten gibt es eine Schnittstelle 1514. Die CAN-Botschaften, die über den CAN-Bus ein- und ausgehen, stehen auf der entsprechenden Leitung 1516 an.

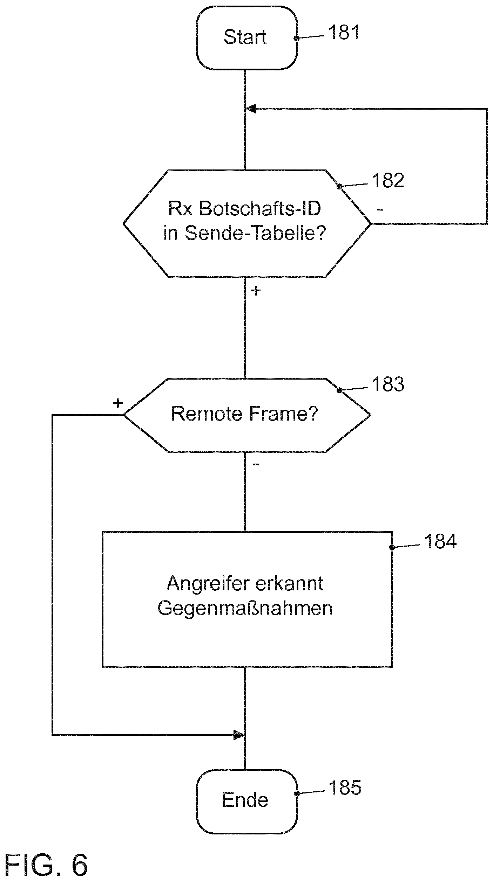

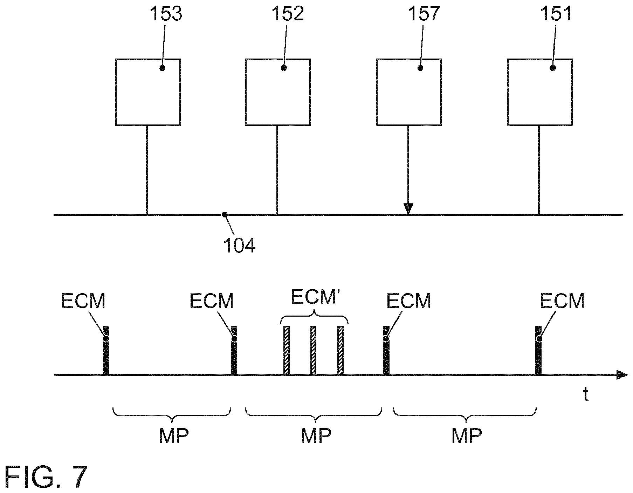

Die Arbeitsweise des Überwachungsmoduls 1518 wird jetzt mit Hilfe des Flussdiagramms in Fig. 6 und der Fig. 7 erläutert.

Das Überwachungsmodul 1518 wird immer dann aktiv, wenn die CAN-Schnittstelle im Empfangsbetrieb arbeitet. Oft sendet ein Steuergerät seine Daten zyklisch auf den Bus. Dazu wird für jeden Zyklus im Steuergerät ein entsprechender Timer eingerichtet. Verschiedene Nutzdaten können mit verschiedenen Zyklen gesendet werden. Die Applikationssoftware 1511 übernimmt die Einrichtung der verschiedenen Timer. Es kann sich um Software-unterstützte Timer oder Hardware-unterstützte Timer handeln (nicht dargestellt). Im Bereich der Steuergeräte des Antriebsstrangs werden üblicherweise Mikrocontroller eingesetzt, die mit einer programmierbaren Timer/Counter-Einheit ausgestattet sind, so dass die Timer hier oft Hardware-unterstützt sind. Bei Ablauf eines Timers wird ein Interrupt ausgelöst, wodurch das Steuergerät vom Empfangsbetrieb in den Sendebetrieb wechselt. Jedes Mal nach Durchführung des Sendebetriebes wechselt das Steuergerät wieder zurück in den Empfangsbetrieb. Dies kann durch Setzen eines Flags im Steuergerät signalisiert werden. Das Setzen dieses Flags wird dann den Start des Überwachungsmoduls auslösen. Daneben gibt es aber auch eine Reihe von anderen Sendearten bei Steuergeräten. Als Beispiele werden die Sendearten (ifActiv, ifAcitvWithRepetition, OnChange, OnChangeWithRepetition) genannt, die nur im Normal-/Ruhezustand zyklisch senden. Tritt ein bestimmtes, definiertes Ereignis ein, z.B. die Änderung eines Sensorwertes, dann werden die Daten außerhalb des Normalzyklus häufig mit einer schnelleren Zykluszeit versendet.

Der Start des Überwachungsprogramms ist in Fig. 6 mit der Bezugszahl 181 bezeichnet. Im Schritt 182 überprüft das Programm jede empfangene Botschaft ähnlich wie bei der Akzeptanzfilterung darauf, ob diese Botschaft mit einem Botschaftsidentifizierer gekennzeichnet ist, der selbst in der stationseigenen Sendetabelle 1515 verzeichnet wurde. In der stationseigenen Sendetabelle 1515 sind alle Botschaftsidentifizierer aufgelistet, die bei der Aussendung von Nutzdaten benutzt werden. Diese Sendetabelle 1515 kann als Teil der stationseigenen Kommunikationsmatrix angesehen werden.

Wenn ein Botschaftsidentifizierer empfangen wurde, der nicht in der Sendetabelle 1515 aufgelistet ist, verzweigt das Programm zum Anfang. Wenn ein Botschaftsidentifizierer empfangen wurde, der in der Sendetabelle 1515 aufgelistet ist, kann es sich um eine Botschaft handeln, die von einem Angreifer auf dem Bus eingeschleust wurde. Es könnte sich allerdings auch um einen Remote Frame handeln, der von einem anderen Steuergerät gesendet wurde. Deshalb wird noch im Schritt 183 überprüft, ob es sich um einen Remote Frame handelt. Dies kann, wie zuvor erläutert, an dem RTR-Bit erkannt werden. Handelt es sich um einen Remote Frame, wird das Überwachungsmodul im Schritt 185 beendet. Wenn es sich nicht um einen Remote Frame handelt, dann kann die Botschaft gefährlich sein, weil sie dann mit Nutzdaten kommt. Dann steht auch für das Überwachungsmodul fest, dass es sich um eine irreguläre Botschaft handelt. Wegen des eingangs erwähnten Eindeutigkeitsprinzips, welches für den CAN-Bus gilt, darf ja kein anderes Steuergerät denselben Botschaftsidentifizierer bei Aussendung seiner Botschaften verwenden. Deshalb werden dann im nächsten Schritt 184 die Gegenmaßnahmen eingeleitet. Als Gegenmaßnahme kommen verschiedene Maßnahmen in Betracht. Dazu gehören beispielsweise das Ansteuern der Alarmanlage, das Einschalten von Warnlichtern, das Absetzen einer Manipulationsmeldung über Funk an einen Zentralrechner des Autoherstellers oder einer Behörde oder an ein Smartphone des Fahrzeughalters, das Abspeichern von Ort, Datum, Zeit des Manipulationsereignisses in einem Speicher, das Sperren der Zündung für eine bestimmte Zeit usw.

Fig. 7 zeigt jetzt noch das Prinzip des Überwachungsverfahrens. Gleiche Bezugszahlen bezeichnen dieselben Komponenten, wie zuvor erläutert. Der Angreifer ist in Fig. 7 mit der Bezugszahl 157 gekennzeichnet. In dem Beispiel hat er sich mit einem entsprechenden Werkzeug an den CAN-Bus 104 aufgeschaltet. Dies gelingt in einer Werkstatt sicherlich problemlos, trotzdem, dass der CAN-Bus oft an unzugänglicher Stelle im Fahrzeug verlegt wird. Es gibt aber in der Regel bestimmte Stellen am Fahrzeug, wo der CAN-Bus zugänglich ist. Im unteren Teil der Fig. 7 ist ein Zyklus dargestellt, mit dem das Motorsteuergerät 151 eine Botschaft ECM auf den Bus sendet. Zur jeweiligen Sendephase ist das Überwachungsmodul 1518 nicht aktiv. In den markierten Phasen MP findet die Überwachung des Busverkehrs statt. Bei der zweiten Phase MP treten weitere ECM' Botschaften auf. Da diese denselben Botschafts-Identifizierer benutzen, der für das Steuergerät 151 reserviert ist, werden sie vom Überwachungsmodul als irregulär erkannt, wie oben beschrieben. Das Motor-Steuergerät 151 leitet daraufhin, wie beschrieben, Gegenmaßnahmen ein.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

### Bezugszeichenliste

- 10: CAN-Knoten
- 12: CAN-Transceiver
- 13: Abschlusswiderstand
- 14: CAN-Controller
- 15: Busleitung
- 16: Host
- 18: Überwachungsmodul
- 100: Kfz-Elektronik
- 102: Infotainment-CAN-Bus
- 104: CAN-Bus
- 110: On-Board Unit
- 120: Navigationssystem
- 130: Bedienungseinheit
- 140: Gateway
- 151: Motor-Steuergerät
- 152: ESP-Steuergerät
- 153: Getriebe-Steuergerät
- 157: Angreifer
- 181: Programmstart
- 182: Vergleich Botschafts-ID mit Sendetabelle
- 183: Prüfung auf Remote Frame
- 184: Gegenmaßnahmen
- 185: Programmende
- 1510: Architektur CAN-Busschnittstelle
- 1511: Applikations-Software
- 1512: 1. Schnittstelle
- 1513: CAN-Controller
- 1514: 2. Schnittstelle
- 1515: Sendetabelle
- 1516: 3. Schnittstelle
- 1518: Überwachungsmodul
- ECM: eine Botschaft des Motorsteuergeräts
- MP: Überwachungsphase

## Patentansprüche

1. Verfahren zur Überwachung der Kommunikation auf einem Kommunikationsbus (104), wobei durch den Kommunikationsbus (104) eine Anzahl von elektronischen Stationen (51, 52, 53) vernetzt sind,
wobei der Kommunikationsbus (104) nach einer Variante der Familie der CAN-Bus Standards, entsprechend Controller Area Network, ausgelegt wird,
wobei die über den Kommunikationsbus (104) übertragenen Botschaften mit einem Identifizierer gekennzeichnet sind, wobei für jede Station (51, 52, 53) festgelegt wird, welche Botschaften mit welchem Identifizierer von ihr gesendet werden dürfen,
wobei eine Eindeutigkeitsregel eingehalten wird, die verbietet, dass eine andere Station (52, 53) eine Nutzdaten-Botschaft mit einem Identifizierer versendet, der schon für diese Station (51) reserviert ist,
wobei in einer oder mehreren oder allen der elektronischen Stationen (51, 52, 53) ein Überwachungsmodul (18, 1518) vorgesehen wird, das überwacht, ob auf dem Kommunikationsbus (104) eine Nutzdaten-Botschaft von einer anderen Station (52, 53) gesendet wird mit einem Identifizierer, der für die eigene Station (51) reserviert ist, und
wobei im Falle des Erkennens einer CAN-Bus Remote Frame Botschaft mit einem Botschafts-Identifizierer, der für die Station (51) reserviert ist, von dem Überwachungsmodul (18, 1518) kein unberechtigter Buszugriff angenommen wird und keine Gegenmaßnahme eingeleitet werden,
**dadurch gekennzeichnet, dass** bei Übereinstimmung des Identifizierers der empfangenen Nutzdaten-Botschaft mit einem Eintrag in einer Sendetabelle (1515) von dem Überwachungsmodul (18, 1518) ein unberechtigter Buszugriff festgestellt wird und als Gegenmaßnahme eine oder mehrere der folgenden Maßnahmen durchgeführt werden:
• Ausgeben einer Warnung an den Fahrzeugführer mit einem optischen, akustischen oder haptischen Signal,
• Einschalten einer Alarmanlage,
• Absetzen einer Manipulationsmeldung über Funk an einen Zentralrechner des Autoherstellers oder einer Behörde oder an ein Smartphone des Fahrzeughalters,
• Abspeichern von Ort, Datum, Zeit des Manipulationsereignisses in einem Speicher,
• Blockieren des Schlüssels, mit dem das Fahrzeug eingeschaltet wurde.

2. Verfahren nach Anspruch 1, wobei das Überwachungsmodul (18, 1518) für die Überwachung auf eine Sendetabelle (1515) zugreift, in der alle der für die Station (51) reservierten Identifizierer verzeichnet sind und den Identifizierer einer empfangenen Botschaft mit den Einträgen in der Sendetabelle (1515) vergleicht.

3. Verfahren nach Anspruch 1 oder 2, wobei während des Zustandes, in dem die Station (51) selbst eine Botschaft über den Kommunikationsbus (104) sendet, die Durchführung der Gegenmaßnahme unterdrückt wird.

4. Verfahren nach Anspruch 3, wobei die Durchführung der Gegenmaßnahme dadurch unterdrückt wird, dass das Überwachungsmodul (18, 1518) während des Zustandes, in dem die Station (51) selbst eine Botschaft über den Kommunikationsbus (104) sendet, inaktiv geschaltet wird und während des Zustandes, wo es Botschaften von dem Kommunikationsbus (104) empfängt, aktiv geschaltet wird.

5. Verfahren nach einem der vorhergehenden Ansprüche, wobei der Kommunikationsbus (104) für den Austausch von Botschaften zwischen elektronischen Komponenten eines Fahrzeuges ausgelegt wird.

6. Verfahren nach einem der vorhergehenden Ansprüche, wobei als Gegenmaßnahme von der Station, die einen unberechtigten Buszugriff feststellt, ein Fehler-Signal über den Bus gesendet wird, wodurch die aktuell übertragene Botschaft als ungültig erklärt wird.

7. Verfahren nach einem der vorhergehenden Ansprüche, wobei die Nutzdaten-Botschaft einen Steuerbefehl beinhaltet.

8. Verfahren nach einem der vorhergehenden Ansprüche, wobei der Identifizierer einem CAN-Bus Botschafts-Identifizierer entspricht.

9. Verfahren nach einem der vorhergehenden Ansprüche, wobei die Nutzdaten-Botschaft einem CAN-Bus Standard Data Frame entspricht.

10. Verfahren nach Anspruch 6, wobei das Fehler-Signal, das über den CAN-Bus als Gegenmaßnahme gesendet wird, einem "Error-Flag" gemäß CAN-Bus-Protokoll entspricht.

11. Elektronische Vorrichtung zum Anschluss an einen Kommunikationsbus (104), **dadurch gekennzeichnet, dass** die Vorrichtung ein Überwachungsmodul (18, 1518) aufweist, das für die Überwachung nach den Schritten eines Verfahrens nach einem der vorhergehenden Ansprüche ausgelegt ist.

## Claims

1. Method for monitoring the communication on a communication bus (104), wherein the communication bus (104) networks a number of electronic stations (51, 52, 53),
wherein the communication bus (104) is designed according to a variant of the family of CAN bus standards, accordingly Controller Area Network,
wherein the messages transmitted via the communication bus (104) are identified by an identifier, it being stipulated for each station (51, 52, 53) which messages can be sent by said station with which identifier, wherein an unambiguity rule prohibiting another station (52, 53) from sending a payload data message with an identifier that is already reserved for this station (51) is observed,
wherein in one or more or all of the electronic stations (51, 52, 53) there is provision for a monitoring module (18, 1518) that monitors whether a payload data message is sent on the communication bus (104) by another station (52, 53) with an identifier that is reserved for its own station (51), and
wherein if a CAN bus Remote Frame message with a message identifier that is reserved for the station (51) is detected, the monitoring module (18, 1518) assumes no unauthorized bus access and no countermeasures are taken,
**characterized in that** if the identifier of the received payload data message matches an entry in a transmission table (1515) then the monitoring module (18, 1518) establishes that there is unauthorized bus access and one or more of the following measures are performed as a countermeasure:
• a warning is output to the vehicle driver using a visual, audible or haptic signal,
• an alarm system is switched on,
• a manipulation report is sent by radio to a central computer of the car manufacturer or of an authority or to a smartphone of the vehicle keeper,
• the location, date and time of the manipulation event are stored in a memory,
• the key that was used to switch on the vehicle is blocked.

2. Method according to Claim 1, wherein for the monitoring the monitoring module (18, 1518) accesses a transmission table (1515) in which all of the identifiers reserved for the station (51) are recorded and compares the identifier of a received message with the entries in the transmission table (1515).

3. Method according to Claim 1 or 2, wherein performance of the countermeasure is suppressed during the state in which the station (51) itself sends a message via the communication bus (104).

4. Method according to Claim 3, wherein performance of the countermeasure is suppressed by virtue of the monitoring module (18, 1518) being deactivated during the state in which the station (51) itself sends a message via the communication bus (104) and being activated during the state in which said monitoring module receives messages from the communication bus (104) .

5. Method according to one of the preceding claims, wherein the communication bus (104) is designed for the exchange of messages between electronic components of a vehicle.

6. Method according to one of the preceding claims, wherein as a countermeasure the station that establishes that there is unauthorized bus access sends an error signal via the bus, as a result of which the currently transmitted message is declared invalid.

7. Method according to one of the preceding claims, wherein the payload data message contains a control command.

8. Method according to one of the preceding claims, wherein the identifier corresponds to a CAN bus message identifier.

9. Method according to one of the preceding claims, wherein the payload data message corresponds to a CAN bus Standard Data Frame.

10. Method according to Claim 6, wherein the error signal sent via the CAN bus as a countermeasure corresponds to an "Error Flag" according to the CAN bus protocol.

11. Electronic apparatus for connection to a communication bus (104), **characterized in that** the apparatus has a monitoring module (18, 1518) that is designed for the monitoring according to the steps of a method according to one of the preceding claims.

## Revendications

1. Procédé de surveillance de la communication sur un bus de communication (104), dans lequel
le bus de communication (104) met en réseau un certain nombre de stations électroniques (51, 52, 53),
le bus de communication (104) est conçu selon une variante de la famille des normes de bus CAN qui signifie « Controller Area Network »,
les messages transmis sur le bus de communication (104) sont marqués par un identifiant, dans lequel il est établi pour chaque station (51, 52, 53) quels messages avec quel identifiant elle peut envoyer,
une règle d'univocité est respectée qui interdit qu'une autre station (52, 53) envoie un message de données utiles avec un identifiant qui est déjà réservé pour cette station (51),
dans une ou plusieurs ou toutes les stations électroniques (51, 52, 53), un module de surveillance (18, 1518) est prévu qui surveille si sur le bus de communication (104) un message de données utiles d'une autre station (52, 53) est envoyé avec un identifiant qui est réservé pour sa propre station (51), et
en cas d'identification d'un message de trame de requête du bus CAN avec un identifiant de message qui est réservé pour la station (51), le module de surveillance (18, 1518) n'accepte aucun accès au bus non autorisé et n'entame aucune contre-mesure,
**caractérisé en ce qu'**en cas de concordance de l'identifiant du message de données utiles reçu avec une entrée dans une table d'envoi (1515) du module de surveillance (18, 1518), un accès au bus non autorisé est constaté, et comme contre-mesures, une ou plusieurs des mesures suivantes sont effectuées :
• émettre un avertissement au conducteur de véhicule par un signal optique, acoustique ou haptique,
• mettre en marche un système d'alarme,
• expédier un message de manipulation par radio à destination d'un ordinateur central du fabricant automobile ou d'un organisme public ou d'un smartphone du propriétaire de véhicule,
• sauvegarder le lieu, la date et l'heure de l'événement de manipulation dans une mémoire,
• bloquer la clé avec laquelle le véhicule a été mis en marche.

2. Procédé selon la revendication 1, dans lequel, pour la surveillance, le module de surveillance (18, 1518) accède à une table d'envoi (1515) dans laquelle tous les identifiants réservés pour la station (51) sont notés et compare l'identifiant d'un message reçu aux entrées dans la table d'envoi (1515).

3. Procédé selon la revendication 1 ou 2, dans lequel l'exécution des contre-mesures est supprimée pendant un état dans lequel la station (51) elle-même envoie un message sur le bus de communication (104).

4. Procédé selon la revendication 3, dans lequel l'exécution de la contre-mesure est supprimée en ce que le module de surveillance (18, 1518) est désactivé pendant l'état dans lequel la station (51) envoie elle-même un message sur le bus de communication (104), et est activé pendant l'état où il reçoit des messages du bus de communication (104).

5. Procédé selon l'une quelconque des revendications précédentes, dans lequel le bus de communication (104) est conçu pour l'échange de messages entre des composants électroniques d'un véhicule.

6. Procédé selon l'une quelconque des revendications précédentes, dans lequel comme contre-mesure de la station qui constate un accès au bus non autorisé, un signal d'erreur est envoyé par le bus, de sorte que le message actuellement transmis est invalidé.

7. Procédé selon l'une quelconque des revendications précédentes, dans lequel le message de données utiles contient une instruction de commande.

8. Procédé selon l'une quelconque des revendications précédentes, dans lequel l'identifiant correspond à un identifiant de message de bus CAN.

9. Procédé selon l'une quelconque des revendications précédentes, dans lequel le message de données utiles correspond à une trame de données standard du bus CAN.

10. Procédé selon la revendication 6, dans lequel le signal d'erreur qui est envoyé comme contre-mesure sur le bus CAN correspond à un drapeau « erreur » selon le protocole de bus CAN.

11. Dispositif électronique pour la connexion à un bus de communication (104), **caractérisé en ce que** le dispositif présente un module de surveillance (18, 1518) qui est conçu pour la surveillance selon les étapes d'un procédé selon l'une quelconque des revendications précédentes.
